(19) Europäisches Patentamt
European Patent Office
Office européen des brevets

(11) **EP 4 693 853 A1**

(12) **EUROPEAN PATENT APPLICATION**
published in accordance with Art. 153(4) EPC

(43) Date of publication:
**11.02.2026 Bulletin 2026/07**

(21) Application number: **23930388.6**

(22) Date of filing: **28.03.2023**

(51) International Patent Classification (IPC):
**H02K 23/58** (2006.01) **H02K 3/04** (2006.01)
**H02K 3/47** (2006.01)

(52) Cooperative Patent Classification (CPC):
**H02K 3/04; H02K 3/47; H02K 23/58**

(86) International application number:
**PCT/JP2023/012646**

(87) International publication number:
**WO 2024/201748 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Citizen Micro Co., Ltd.**
**Hidaka City, Saitama 350-1251 (JP)**
• **Citizen Watch Co., Ltd.**
**Nishitokyo-shi, Tokyo 188-8511 (JP)**

(72) Inventors:
• **IGARASHI, Satoshi**
**Hidaka City, Saitama 3501251 (JP)**
• **YANAGISAWA, Akira**
**Hidaka City, Saitama 3501251 (JP)**
• **YOKOCHI, Masato**
**Hidaka City, Saitama 3501251 (JP)**

(74) Representative: **Louis Pöhlau Lohrentz**
**Patentanwälte**
**Merianstrasse 26**
**90409 Nürnberg (DE)**

(54) **CORELESS MOTOR**

(57) To improve properties of a motor, a coreless motor (100) includes a rotating shaft (20); a coil (60) that is formed by winding a conductive wire (61) into a cylindrical shape, the coil being configured to rotate together with the rotating shaft (20); and a cylindrical magnet (30) that is arranged inside or outside the cylindrical coil (60), wherein a single winding of the coil (60) is formed into a hexagonal shape including a parallel portion (62) extending parallel to an axial direction (center C direction) of the rotating shaft (20) and two oblique portions (63), (64) that incline to a plane perpendicular to the center C direction and are connected to both ends of the parallel portion (62), the oblique portions (63), (64) are curved to have a convex from the inside to the outside of the single winding of the coil (60), and a tangent angle (θ) between a tangent line of the oblique portion (63) that is drawn from a vertex connecting ends of the two adjacent oblique portions (63), (64) of the single winding of the coil (60) and a plane perpendicular to the rotating shaft (20) is set a range of 15 degrees or more and 50 degrees or less.

[FIG.5]

## Description

[TECHNICAL FIELD]

The present invention relates to a coreless motor.

[Background Art]

In a coreless motor, a rotor is formed only by windings without including an iron core in the coil. One example of a method for winding a conductive wire to form the coil is to wind the wire into a hexagonal shape (tortoise-shell shape). In this tortoise-shell shape winding method, for example, the conductive wire is wound in the circumferential direction of the outer peripheral surface of a hexagonal prism, while being gradually displaced in the axial direction of the hexagonal prism, thereby forming a coil element having a hexagonal spiral shape. Then, the hexagonal prism is axially pulled out from the coil element, thereby obtaining a coil element formed into a hexagonal-prism shape only with the conductive wire spirally wound.

Then, edges corresponding to mutually opposing side surfaces of the hexagonal prism are moved in opposite directions along the axial direction of the prism to flatten the prism into a planar shape. A plurality of such flattened coil elements is arranged in a ring shape, and their axial end portions are connected together, thereby forming a cylindrical coil.

The cylindrical coil includes, on both outside and inside thereof, a parallel portion in which the conductive wire is parallel to the axis of the cylinder and two oblique portions in which the conductive wire is inclined with respect to the plane perpendicular to the axis of the cylinder. Here, a cylindrical coil having an oblique portion formed into a circular curve to increase a magnetic flux passing through the oblique portion is also proposed (see, for example, Patent Literature 1).

In addition, a coil in which a conductive wire is wound into a square shape rather than a hexagonal shape (tortoise-shell shape) having only an oblique side formed into circular curve without having a parallel portion is proposed (see, for example, Patent Literature 2).

[Prior Art Documents]

[Patent Literature]

[Patent Literature 1] Japanese Patent Application Publication No. 2014-054026A
[Patent Literature 2] Japanese Patent Application Publication No. S55-023788A

[Summary of Invention]

[Problem to be solved]

The coil shown in the above-described prior art literatures increases a passing magnetic flux by forming the oblique portion into a curved shape. However, the coil does not specifically define the practical shape of the curve of the oblique portion.

The present invention has been made in view of the above circumstances, and an object of the present invention is to provide a coreless motor that specifically defines a practical shape of a curve of an oblique portion of a hexagonal shaped (tortoise-shell shaped) coil to improve properties of a motor.

[Solution to Problem]

The present invention includes a rotating shaft; a coil that is formed by winding a conductive wire into a cylindrical shape, the coil being configured to rotate together with the rotating shaft; and a cylindrical magnet that is arranged inside or outside the cylindrical coil, wherein a single winding of the coil is formed into a hexagonal shape including a parallel portion extending parallel to an axial direction of the rotating shaft and two oblique portions that incline to a plane perpendicular to the axial direction and are connected to both ends of the parallel portion, the oblique portions are curved to have a convex from the inside to the outside of the single winding of the coil, and a tangent angle between a tangent line of the oblique portion that is drawn from a vertex connecting ends of the two adjacent oblique portions of the single winding of the coil and a plane perpendicular to the axial direction is set to a range of 15 degrees or more and 50 degrees or less.

**EP 4 693 853 A1**

[Effects of Invention]

As the coreless motor according to the present invention specifically defines the practical shape of the curve of the oblique portion of the hexagonal shaped (tortoise-shell shape) coil, the coreless motor according to the present invention demonstrate excellent motor properties.

[Brief Description of Drawings]

[FIG. 1] FIG. 1 is sectional view illustrating a longitudinal section including a center C of a rotating shaft of a coreless motor of a first embodiment.
[FIG. 2] FIG. 2 is a side view illustrating a coil of the coreless motor illustrated in FIG. 1.
[FIG. 3A] FIG. 3A is a schematic diagram illustrating a process 1 for manufacturing the coil illustrated in FIG. 2.
[FIG. 3B] FIG. 3B is a schematic diagram illustrating a process 2 for manufacturing the coil illustrated in FIG. 2.
[FIG. 3C] FIG. 3C is a schematic diagram illustrating a process 3 for manufacturing the coil illustrated in FIG. 2.
[FIG. 4] FIG. 4 is a schematic diagram illustrating a positional relationship between a magnet and a hexagonal shape of a single winding of the coil.
[FIG. 5] FIG. 5 is a schematic diagram illustrating a tangent angle θ between a tangent of an oblique portion of the coil and a plane perpendicular to a parallel portion.
[FIG. 6] FIG. 6 is a schematic diagram illustrating a size relationship between a magnetic pole pitch and a coil pitch in the coreless motor.
[FIG. 7] FIG. 7 is a schematic diagram illustrating the full length of the coil along the axial direction of the center C and the length of the parallel portion.
[FIG. 8] FIG. 8 is a graph showing a relationship between a tangent angle θ of the coil and a cross-sectional area of a copper wire in the plane perpendicular to the parallel portion.
[FIG. 9] FIG. 9 is a graph showing the maximum torque output by a conductive wire of the single winding of the coil when a ratio of a coil pitch to a magnetic pole pitch (e.g., 180°) is 0.95, 1.00, 1.05, 1.10, and 1.25 (171°, 180°, 189°, 198°, and 225°) in each coil in which a tangent angle is set to 38.4° and a ratio of a length of the parallel portion to the full length of the coil is set to 0.25, 0.30, 0.35, 0.40, and 0.45.
[FIG. 10] FIG. 10 is a graph showing the maximum torque output by the conductive wire of the single winding of the coil when the ratio of the coil pitch to the magnetic pole pitch (e.g., 180°) is 0.95, 1.00, 1.05, 1.10, and 1.25 (171°, 180°, 189°, 198°, and 225°) in each coil in which the tangent angle is set to 32.0° and the ratio of the length of the parallel portion to the full length of the coil is set to 0.25, 0.30, 0.35, 0.40, and 0.45.
[FIG. 11] FIG. 11 is a graph showing the maximum torque output by the conductive wire of the single winding of the coil when the ratio of the coil pitch to the magnetic pole pitch (e.g., 180°) is 0.95, 1.00, 1.05, 1.10, and 1.25 (171°, 180°, 189°, 198°, and 225°) in each coil in which the tangent angle is set to 25.6° and the ratio of the length of the parallel portion to the full length of the coil is set to 0.25, 0.30, 0.35, 0.40, and 0.45.
[FIG. 12] FIG. 12 is a graph showing the maximum torque output by the conductive wire of the single winding of the coil when the ratio of the coil pitch to the magnetic pole pitch (e.g., 180°) is 0.95, 1.00, 1.05, 1.10, and 1.25 (171°, 180°, 189°, 198°, and 225°) in each coil in which the tangent angle is set to 15.0° and the ratio of the length of the parallel portion to the full length of the coil is set to 0.25, 0.30, 0.35, 0.40, and 0.45.
[FIG. 13] FIG. 13 is a graph showing the maximum torque output by the conductive wire of the single winding of the coil when the tangent angle is 38.4°, 32.0°, 25.6°, and 15.0° in each coil in which the ratio of the coil pitch to the magnetic pole pitch (e.g., 180°) is 0.95 (171°) and the ratio of the length of the parallel portion to the full length of the coil is set to 0.25, 0.30, 0.35, 0.40, and 0.45.
[FIG. 14] FIG. 14 is a graph showing the maximum torque output by the conductive wire of the single winding of the coil when the tangent angle is 38.4°, 32.0°, 25.6°, and 15.0° in each coil in which the ratio of the coil pitch to the magnetic pole pitch (e.g., 180°) is 1.00 (180°) and the ratio of the length of the parallel portion to the full length of the coil is set to 0.25, 0.30, 0.35, 0.40, and 0.45.
[FIG. 15] FIG. 15 is a graph showing the maximum torque output by the conductive wire of the single winding of the coil when the tangent angle is 38.4°, 32.0°, 25.6°, and 15.0° for each coil in which the ratio of the coil pitch to the magnetic pole pitch (e.g., 180°) is 1.05 (189°) and the ratio of the length of the parallel portion to the full length of the coil is 0.25, 0.30, 0.35, 0.40, and 0.45.
[FIG. 16] FIG. 16 is a graph showing the maximum torque output by the conductive wire of the single winding of the coil when the tangent angle is 38.4°, 32.0°, 25.6°, and 15.0° for each coil in which the ratio of the coil pitch to the magnetic pole (e.g., 180°) is 1.10 (198°) and the ratio of the length of the parallel portion to the full length of the coil is set to 0.25, 0.30, 0.35, 0.40, and 0.45.

[FIG. 17] FIG. 17 is a graph showing the maximum torque output by the conductive wire of the single winding of the coil when the tangent angle is 38.4°, 32.0°, 25.6°, and 15.0° for each coil in which the ratio of the coil pitch to the magnetic pole pitch (e.g., 180°) is 1.25 (225°) and the ratio of the length of the parallel portion to the full length of the coil is set to 0.25, 0.30, 0.35, 0.40, and 0.45.

[Detailed Description of Embodiments]

An embodiment of a coreless motor according to the present invention is described below with reference to the drawings.

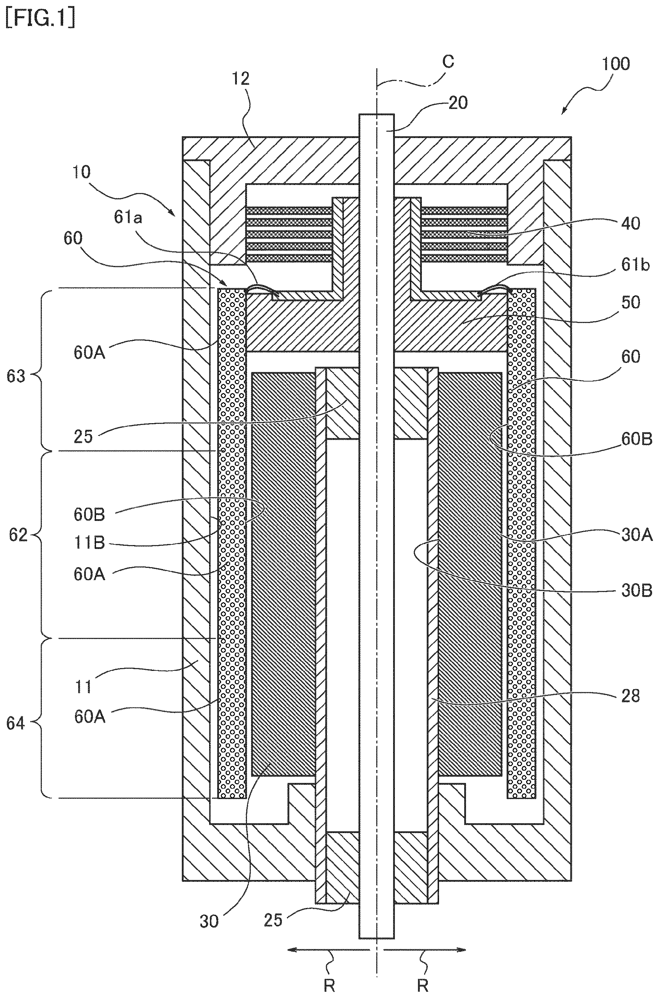

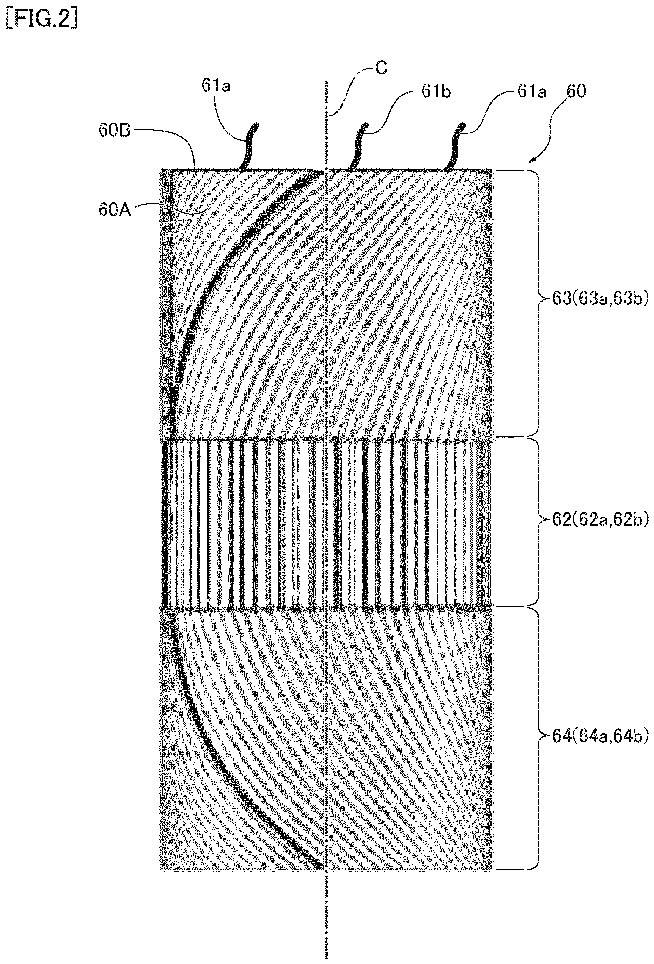

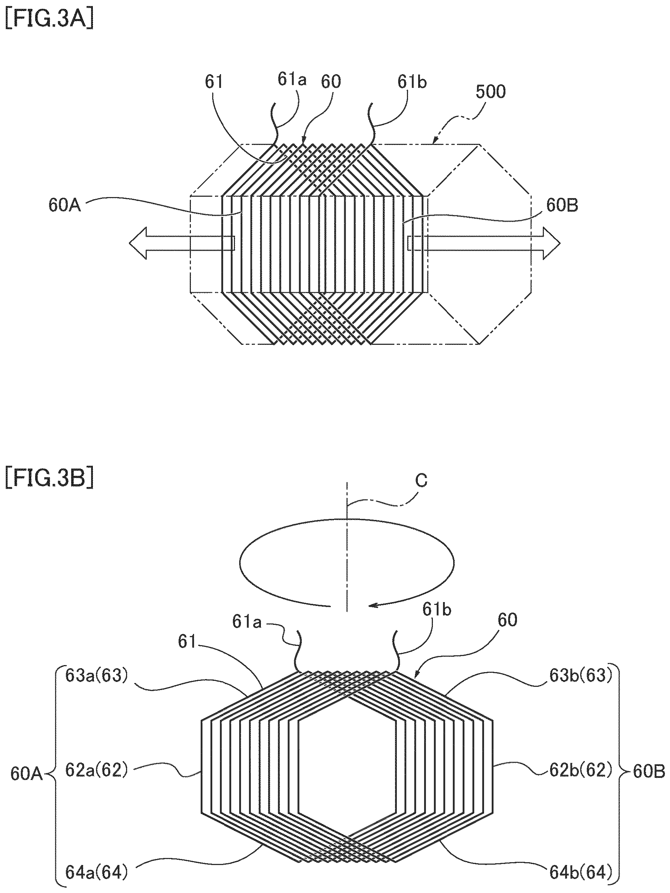

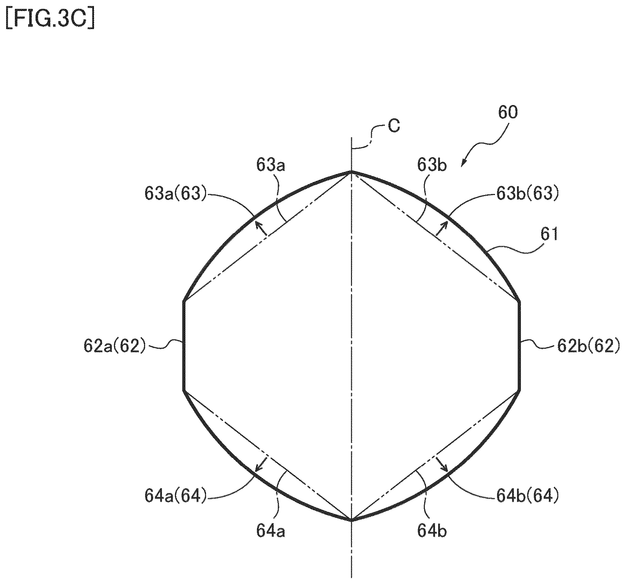

FIG. 1 is a sectional view illustrating a longitudinal section of including a center C of a rotating shaft 20 of a coreless motor 100. FIG. 2 is a perspective view illustrating a coil 60 of the coreless motor 100 illustrated in FIG. 1. FIG. 3A, 3B, 3C are schematic diagrams illustrating processes of manufacturing the coil 60. The coreless motor 100 is one embodiment of the coreless motor according to the present invention.

As illustrated in FIG. 1, the coreless motor 100 includes the rotating shaft 20, the coil 60, a commutator 50, a magnet 30, a brush 40, and a housing 10.

The housing 10 is formed in a hollow cylinder with both ends closed. The housing 10 houses inside the hollow cylinder the rotating shaft 20, the coil 60, the commutator 50, the magnet 30, and the brush 40. Both ends of the rotating shaft 20 project outward from the housing 10. The housing 10 includes a case 11 and a brush base 12.

The case 11 is formed in a cylinder with one end closed. The case 11 is made of a soft magnetic material such as metal. The case 11 may be made of multiple components. The brush base 12 has a roughly circular disk shape to close the open end of the case 11. The brush base 12 is made of resin, for example. The brush base 12 is provided with a connection member (not shown) of a conductive wire connected to an external power source and a brush 40 electrically connected to this connection member.

The rotating shaft 20 is arranged at the center C that is the axis of the cylinder of the housing 10 to extend through the housing 10. The rotating shaft 20 is freely rotatable about the center C. The commutator 50 is fixed to the rotating shaft 20. The coil 60 is fixed to the commutator 50. In other words, the rotating shaft 20, the coil 60, and the commutator 50 constitute a rotor.

As illustrated in FIG. 2, the coil 60 is formed in a cylinder by winding a conductive wire 61 (see FIGS. 3A, 3B). The coil 60 rotates together with the rotating shaft 20 about the center C of the rotating shaft 20 as its axis. The coil 60 is formed by assembling a plurality of coil elements, each formed by winding the conductive wire 61. The coil 60 includes an outer peripheral surface 60A of the cylinder that does not contact an inner peripheral surface 11B of the case 11. Details of the coil 60 are described hereinafter.

The commutator 50 is formed in a disc having in the center portion thereof a boss through which the rotating shaft 20 penetrates. The outer peripheral portion of the disc of the commutator 50 is bonded to the inner circumference portion of one end of the cylindrical coil 60 that is close to the brush base 12 with an adhesive, and is integrated with the coil 60. The commutator 50 is bonded to the rotating shaft 20 that passes through the boss, and the commutator 50 thereby rotates about the center C together with the rotating shaft 20.

The commutator 50 includes a conductive member that is electrically connected to terminals 61a, 61b (see FIGS. 2, 3A, 3B) of each conductive wire 61 of a plurality of coil elements constituting the coil 60. The conductive member extends to the outer peripheral surface of the boss and contacts the brush 40 provided on the brush base 12.

The magnet 30 is arranged inside the cylinder of the coil 60 without contacting an inner peripheral surface 60B of the coil 60. The magnet 30 is a cylinder with the center C as its axis. The outer peripheral surface 30A of the magnet 30 does not contact the inner peripheral surface 60B of the coil 60. The inner peripheral surface 30B of the magnet 30 is fixed to the outer peripheral surface of a cylindrical support member 28 fixed to the case 11.

The magnet 30 is thereby indirectly fixed to the case 11 and does not displace relative to the case 11. The support member 28 includes inside thereof bearings 25 arranged at both ends of the support member 28 in the longitudinal direction, and the rotating shaft 20 is rotatably supported by the two bearings 25.

Next, the details of the coil 60 are described as follows. The coil 60 is basically formed by bonding the conductive wires 61 to each other with an adhesive, and does not include any core such as an iron core. Therefore, the coil 60 is lighter than a coil with a core.

As illustrated in FIG. 3A, the coil 60 is formed by winding the conductive wire 61 (e.g., copper wire) around an outer peripheral surface of a hexagonal prism winding jig 500, which has a hexagonal cross section. The winding position of the conductive wire 61 is slightly shifted in the axial direction of the hexagonal column at each turn (each winding around outer peripheral surface of hexagonal column) to form the hexagonal spiral coil 60 as a whole having a hexagonal shape (tortoise-shell shape) when the single winding of the coil 60 is projected in the axial direction.

FIGS. 3A, 3B illustrate that the hexagonal shapes formed by the conductive wires 61 are separately and independently illustrated; however, these are for simplifying the illustration. In fact, the conductive wire 61 illustrated by a plurality of hexagonal shapes has one spiral shape in which both ends of one round of the conductive wire 61 of each hexagonal shape are connected to the ends of the single winding of the adjacent conductive wire 61 of the hexagonal shape. One conductive wire 61 formed into the spiral shape includes both ends 61a, 61b.

The pulling the winding jig 500 in the axial direction from the hexagonal spiral coil 60 formed as described above yields the coil 60 formed in a hexagonal spiral shape using only the conductive wire 61. Then, the sides of the coil 60 corresponding to the opposing surfaces of the hexagonal prism of the winding jig 500 are moved in the opposite directions along the axial direction of the hexagonal prism (illustrated by "→" in FIG. 3A) to form the coil 60 flattened into a plane shape illustrated in FIG. 3B.

The conductive wire 61 of the single winding of the coil 60 has a hexagonal shape corresponding to the sectional shape of the winding jig 500. As illustrated in FIG. 3B, the hexagonal shape includes a parallel portion 62 extending parallel in the axial (center C) direction of the rotating shaft 20 and two oblique portions 63, 64 connected to both ends of the parallel portion 62. The conductive wire 61 of the oblique portions 63, 64 linearly extends in a direction inclined at a predetermined angle with respect to the plane perpendicular to the center C. The direction of the inclined angle of the oblique portions 63, 64 are opposite to each other, but their absolute values are the same.

After that, the oblique portions 63, 64 illustrated in FIG. 3C with two-dot chain lines are deformed to be convex from the inside to the outside of the single winding (hexagonal shape) of the coil 60, so that the coil 60 illustrated in FIG. 3B is then deformed to be a curved convex to the outside as illustrated in FIG. 3C. The curve of the coil 60 of this embodiment is an arc, for example, but in the coreless motor according to the present invention, the curve of the coil is not limited to an arc. For example, the curve of the coil may be an ellipse, a parabola, or a plurality of straight lines connected to each other that approximate these curves (arc, ellipse, and parabola).

The coil 60 illustrated in FIG. 3C is used as a single coil element. A plurality of coil elements are connected in the axial direction of the above-described hexagonal prism. The end portions of the coil elements in the axial direction are connected around the center C illustrated in FIG. 3B such that one plane 60A and the other plane 60B of the planar coil element to be an outward facing plane (outer peripheral surface) and an inward facing plane (inner peripheral surface), respectively. The method for forming the curve of the coil 60 is not limited to the above-described method.

For example, instead of the hexagonal prism shape winding jig 500, the winding jig may be a prism shape winding jig with two planes of the hexagonal prism, which correspond to the parallel portions 62, formed into flat surfaces and the other planes of the hexagonal prism, which exclude the two planes, formed into curved surfaces that are convex outward rather than a flat surface. The conductive wire 61 may be wound around this prism shape winding jig to form the curve of the coil 60. This method allows the curve of the coil 60 to be formed accurately and easily.

The coil 60 formed in this way is a tortoise-shell shape (hexagonal shape) coil 60, and as illustrated in FIG. 2, the coil 60 includes, on both of the outer peripheral surface 60A and the inner peripheral surface 60B, the parallel portion 62 in which the conductive wire 61 extends parallel to the axis (center C) direction of the rotating shaft 20, the oblique portion 63 connected to one end of the parallel portion 62, and the oblique portion 64 connected to the other end of the parallel portion 62.

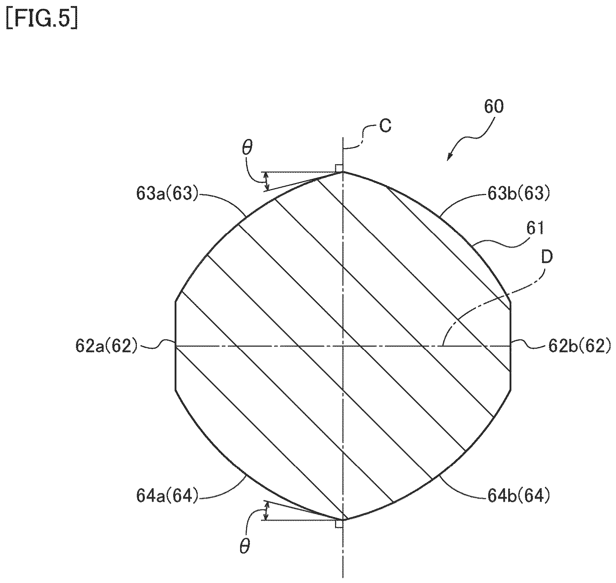

As illustrated in FIG. 5, the end portions of the conductive wire 61 of each oblique portion 63, 64 in the length direction (axial direction of center C) along the parallel portion 62 contact a plane perpendicular to the direction in which the parallel portion 62 extends at a predetermined angle θ.

Namely, an angle between a tangent (tangent of oblique portion 63a, 63b) to a curve drawn from the vertex of the hexagon at which the ends of the two adjacent oblique portions 63, 63 (oblique portion 63a, 63b) of the coil 60 are connected and the plane perpendicular to the axis of the center C and an angle between a tangent (tangent to oblique portion 64a, 64b) to a curve drawn from the vertex of the hexagon at which the ends of the two adjacent oblique portions 64, 64 (oblique portions 64a, 64b) of the conductive wire 61 are connected and the plane perpendicular to the axis of the center C are each equal to the angle θ.

In the following description, this angle θ is referred to as a tangent angle θ of the oblique portion 63, 64. In FIG. 5, the tangent angle θ is drawn only on the left side of the center C, but it also exists on the right side of the center C in a line symmetrical manner with the center C as its axis.

When it is necessary to distinguish the parallel portion 62 on the outer peripheral surface 60A of the coil 60 and the parallel portion 62 on the inner peripheral surface 60B of the coil 60, the parallel portion 62 on the outer peripheral surface 60A is referred to as a parallel portion 62a and the parallel portion 62 on the inner peripheral surface 60B is referred to as a parallel portion 62b, as illustrated in FIG. 3B. Similarly, when it is necessary to distinguish the oblique portion 63, 64 on the outer peripheral surface 60A of the coil 60 and the oblique portion 63, 64 on the inner peripheral surface 60B of the coil 60, the oblique portion 63, 64 on the outer peripheral surface 60A is referred to as an oblique portion 63a, 64a and the oblique portion 63, 64 on the inner peripheral surface 60B is referred to as an oblique portion 63b, 64b.

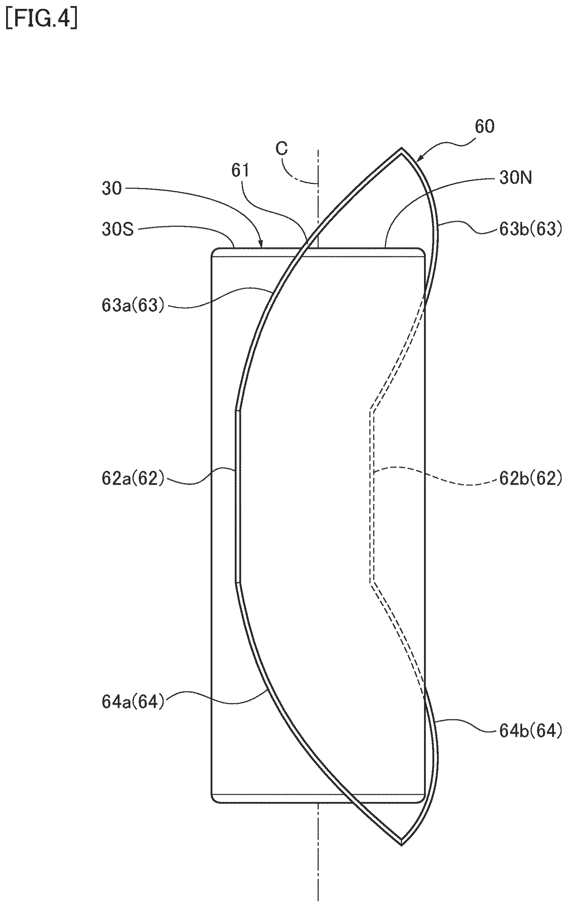

FIG. 4 is a schematic diagram illustrating the positional relationship between the magnet 30 and the hexagonal shape of the single winding of the coil 60. As illustrated in FIG. 4, the magnet 30 of the coreless motor 100 of this embodiment is provided with one N-pole 30N and one S-pole 30S across the axis of the center C. That is, the magnet 30 is provided with the N-pole 30N and the S-pole 30S arranged at an angular interval (angular pitch) of 180° about the axis of the center C of the magnet 30.

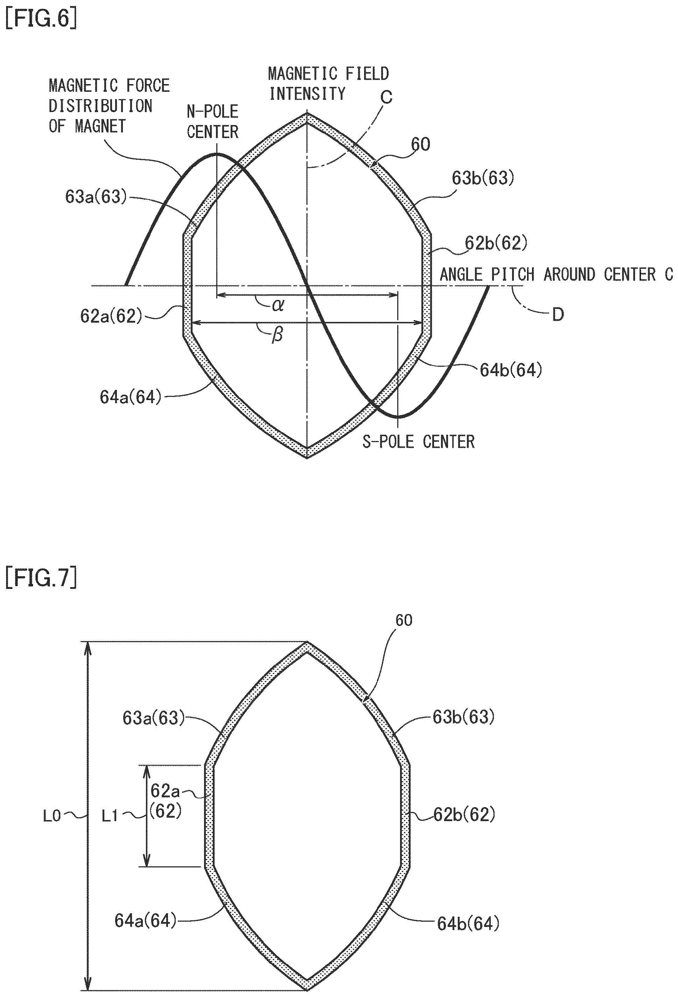

FIG. 6 is a schematic diagram illustrating the relative sizes of a magnetic pole pitch $\alpha$ and a coil pitch $\beta$ in the coreless motor 100, and also illustrates a magnetic force distribution expressed by a trigonometric function, where the magnetic force of the magnet 30 is at its maximum at the center of the N-pole 30N and the center of the S-pole 30S. FIG. 7 is a schematic diagram illustrating a full length L0 along the axial direction of the center C of the coil 60 and a length L1 of the parallel portion 62.

As illustrated in FIG. 6, the center of the N-pole 30N (N-pole center) and the center of the S-pole 30S (S-pole center) of the magnet 30 are the angular positions at which the absolute value of the magnetic force distribution of the magnet 30 is maximum. In the following description, an angular pitch (angular interval) along the circumferential direction D about the axis of the center C of the center of the N-pole 30N and the center of the S-pole 30S of the magnet 30 is referred to as a magnetic pole pitch $\alpha$.

In the coreless motor 100 of this embodiment, the two parallel portions 62, 62 of the hexagon of the single winding (see FIG. 5) is arranged at an angular interval (angular pitch) about the axis of the center C of the magnet 30, as illustrated in FIG. 6. In the following description, the angular pitch (angular interval) between the two parallel portions 62, 62 of the coil 60 along the circumferential direction D about the axis of the center C is referred to as a coil pitch $\beta$.

The coreless motor 100 of the present embodiment has the coil 60 in which a ratio (ratio of angular pitch) $\beta/\alpha$ of the coil pitch $\beta$ to the magnetic pole pitch $\alpha$ is set to a range of 1.00 (100%) or more and 1.25 (125%) or less as an example. For example, when the magnetic pole pitch $\alpha$ of the magnet 30 in the coreless motor 100 is 180 degrees, the ratio of the angle pitch of 1.00 (100%) corresponds to the coil pitch $\beta$ of 180 degrees, and the ratio of the angle pitch of 1.25 (125%) corresponds to the coil pitch $\beta$ of 225 degrees.

The coreless motor 100 also has the coil 60 in which a ratio L1/L0 (length ratio) of the length L1 of the parallel portion 62 to the full length L0 along the axial direction of the center C as illustrated in FIG. 7 is set to a range of 0.25 (25%) or more and 0.75 (75%) or less as an example.

Here, the maximum torque T output by the coreless motor 100 due to the magnetic force acting on the conductive wire 61 of the coil 60 in the magnetic field of the magnet 30 is given by the following equation (1).

$$T = 2 * B * I * r * L * \sin\theta i \quad (1)$$

Where, B is the magnetic flux from the magnet 30, I is the current flowing through the coil 60, r is a radius of the coil 60 (dimension along radial direction R), L is the length of the coil 60 (dimension along center C direction), and $\theta i$ is the inclined angle of the conductive wire 61 in the coil 60 with respect to the plane perpendicular to the center C direction (90 degrees at parallel portion 62; $\theta$ degree at upper oblique portion 63, and $\theta$ degree at lower oblique portion 64), respectively.

That is, the maximum torque T output by the coreless motor 100 is greater the larger the area of the region illustrated by the oblique line in FIG. 5. Therefore, in the coreless motor 100 of the present embodiment, the coil 60 has an increased area of the oblique line area illustrated in FIG. 5 compared to the coil having the straight oblique portions 63, 64 illustrated by the two-dot line in FIG. 3C, so that the magnetic flux acting on the coil 60 as a whole is increased, and the maximum torque T output by the coreless motor 100 that is a characteristic of the coreless motor 100 can be increased.

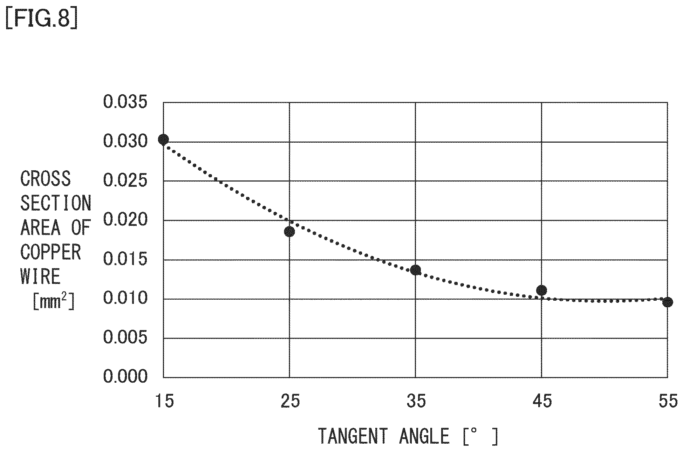

The area of the region illustrated by the oblique line can be also increased as the tangent angle $\theta$ of the coil 60 illustrated in FIG. 5 is reduced, so that the maximum torque T output by the coreless motor 100 can be increased. However, in this case, the cross-sectional area of the conductive wire 61 (copper wire), that is based on the plane perpendicular to the parallel portion 62, at the end of the oblique portion 63, 64 in the length direction of the coil 60 increases as the tangent angle $\theta$ decreases as illustrated in Table 1 and FIG. 8. The specific values of the cross-sectional area of the conductive wire 61 illustrated in Table 1 and FIG. 8 are examples when the diameter of the conductive wire 61 is 0.1 mm. Therefore, in this example, the cross-sectional area of the conductive wire 61, that is based on the plane perpendicular to the parallel portion 62, in the parallel potion 62 is 0.0078 $mm^2$. FIG. 8 is a graph of Table 1.

[Table 1]

| TANGENT ANGLE | 15 | 25 | 35 | 45 | 55 |
|---|---|---|---|---|---|
| CROSS SECTION AREA OF COPPER WIRE | 0.030 | 0.019 | 0.014 | 0.011 | 0.010 |

When the cross-sectional area of the conductive wire 61 in the oblique portion 63, 64 increases, it becomes more difficult for the conductive wires 61 to align with each other, so the space factor of the conductive wire 61 in the parallel portion 62 decreases, and the thickness of the end in the length direction of the coil 60 also increases. Therefore, as can be seen from the graph illustrated in FIG. 8, it is preferable for the tangent angle $\theta$ of the coreless motor 100 to have a range of 15 degrees or more that is a range in which the cross-sectional area of the conductive wire 61 does not increase rapidly as the tangent angle decreases, i.e., the space factor in the parallel portion 62 is not about 30% or less, i.e., a range in which the cross-sectional area of the conductive wire 61 in the oblique portion 63, 64 does not exceed three times the cross-sectional area of the conductive wire 61 in the parallel portion 62, and in particular, a range of 20 degrees or more that is a range in which the space factor of the conductive wire 61 in the parallel portion 62 and the thickness of the end of the coil 60 in the length direction are more practical.

The maximum torque T output by the coreless motor 100 also decreases to an impractical value when the tangent angle $\theta$ of the oblique portion 63, 64 exceeds 50 degrees. Therefore, in view of the practical range of the maximum torque T output by the coreless motor 100, it is preferable for the tangent angle $\theta$ to be 50 degrees or less.

In other words, it is preferable for the tangent angle $\theta$ to be 15 degrees or more and 50 degrees or less, and in particular, 20 degrees or more and 50 degrees or less, and more particularly, 20 degrees or more and 35 degrees or less.

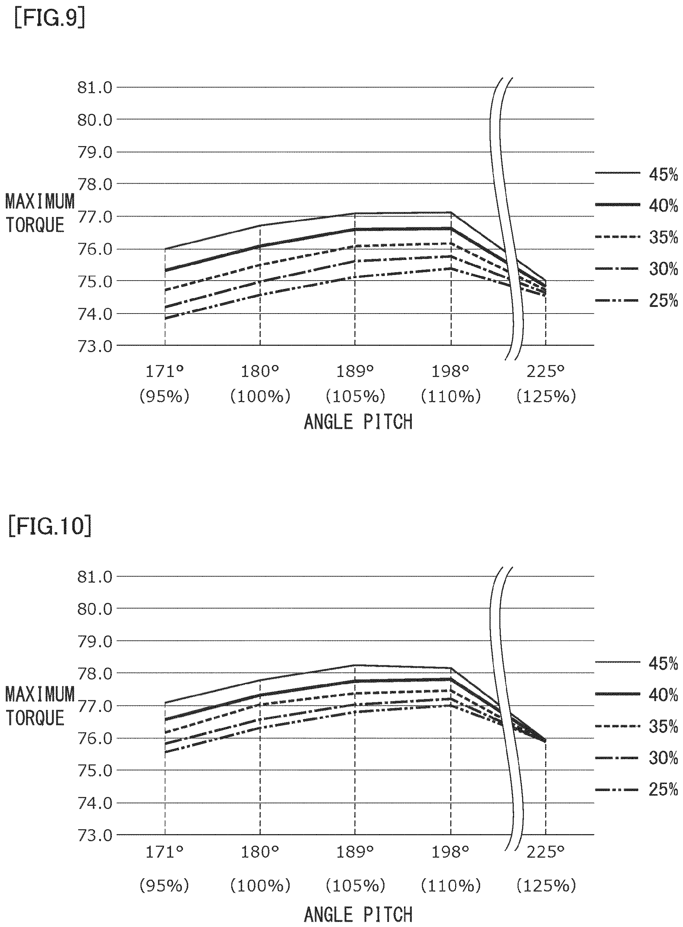

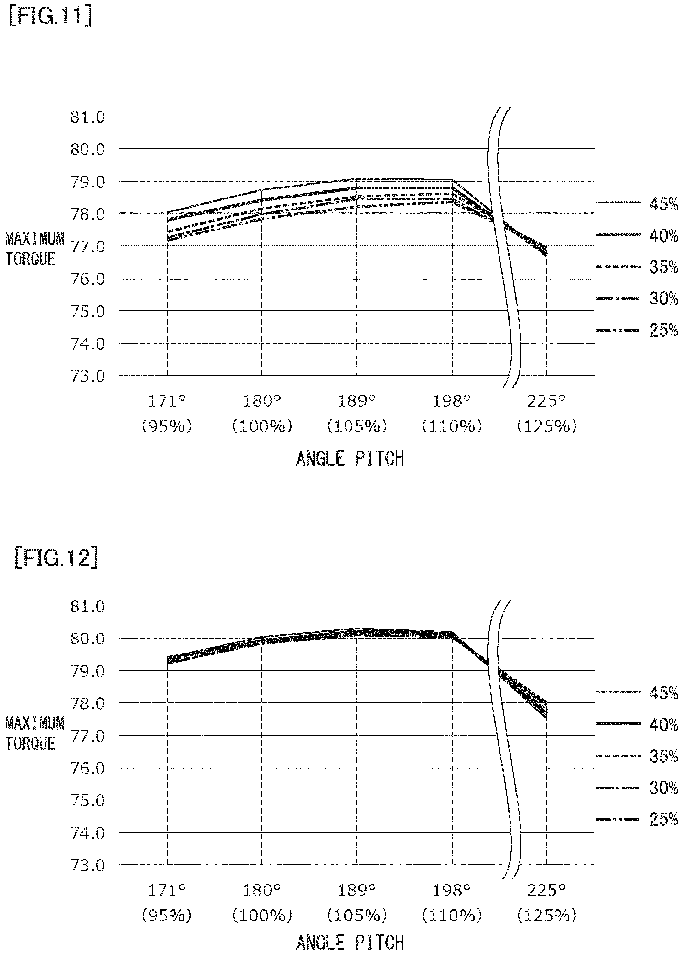

Tables 2 to 5 and FIGS. 9 to 12 show the maximum torque output by the single winding conductive wire 61 of the coil 60 the coreless motor 100 when the ratio (angle pitch ratio) $\beta/\alpha$ of the coil pitch $\beta$ to the magnetic pole pitch $\alpha$ is varied from 0.95 (95%) to 1.25 (125%) and the ratio (length ratio) L1/L0 of the length L1 of the parallel portion 62 to the full length L0 of the coil 60 is varied from 0.25 (25%) to 0.45 (45%) in the coreless motor 100 of this embodiment in which the tangent angle $\theta$ of the coil 60 is set to 38.4 degrees, 32.0 degrees, 25.6 degrees, and 15.0 degrees, respectively, to be set to each tangent angle $\theta$. FIGS. 9 to 12 are graphs of Tables 2 to 5, respectively.

[Table 2]

| TANGENT ANGLE : 38.4° | | | | | | |
|---|---|---|---|---|---|---|
| RATIO OF LENGTH OF PARALLEL PORTION PITCH | | 25% | 30% | 35% | 40% | 45% |
| 171° | (95%) | 73.9 | 74.2 | 74.7 | 75.3 | 76.0 |
| 180° | (100%) | 74.6 | 75.0 | 75.5 | 76.1 | 76.7 |
| 189° | (105%) | 75.1 | 75.6 | 76.1 | 76.6 | 77.1 |
| 198° | (110%) | 75.4 | 75.7 | 76.2 | 76.6 | 77.1 |
| 225° | (125%) | 74.6 | 74.6 | 74.7 | 74.8 | 75.0 |

[Table 3]

| TANGENT ANGLE : 32.0° | | | | | | |
|---|---|---|---|---|---|---|
| RATIO OF LENGTH OF PARALLEL PORTION PITCH | | 25% | 30% | 35% | 40% | 45% |
| 171° | (95%) | 75.6 | 75.8 | 76.2 | 76.6 | 77.1 |
| 180° | (100%) | 76.3 | 76.6 | 77.0 | 77.3 | 77.8 |
| 189° | (105%) | 76.8 | 77.0 | 77.4 | 77.7 | 78.2 |
| 198° | (110%) | 77.0 | 77.2 | 77.5 | 77.8 | 78.2 |
| 225° | (125%) | 75.9 | 75.9 | 75.9 | 75.9 | 75.9 |

[Table 4]

| TANGENT ANGLE: 25.6° | | | | | | |
|---|---|---|---|---|---|---|
| RATIO OF LENGTH OF PARALLEL PORTION PITCH | | 25% | 30% | 35% | 40% | 45% |
| 171° | (95%) | 77.2 | 77.3 | 77.4 | 77.8 | 78.0 |
| 180° | (100%) | 77.8 | 78.0 | 78.1 | 78.4 | 78.7 |
| 189° | (105%) | 78.2 | 78.4 | 78.5 | 78.8 | 79.1 |
| 198° | (110%) | 78.4 | 78.5 | 78.6 | 78.8 | 79.1 |
| 225° | (125%) | 77.0 | 76.9 | 76.9 | 76.7 | 76.7 |

[Table 5]

| TANGENT ANGLE:15° | | | | | | |
|---|---|---|---|---|---|---|
| RATIO OF LENGTH OF PARALLEL PORTION PITCH | | 25% | 30% | 35% | 40% | 45% |
| 171° | (95%) | 79.4 | 79.3 | 79.2 | 79.4 | 79.4 |

(continued)

| TANGENT ANGLE:15° | | | | | | |
|---|---|---|---|---|---|---|
| RATIO OF LENGTH OF PARALLEL PORTION PITCH | | 25% | 30% | 35% | 40% | 45% |
| 180° | (100%) | 79.9 | 79.8 | 79.9 | 79.9 | 80.0 |
| 189° | (105%) | 80.1 | 80.1 | 80.1 | 80.2 | 80.3 |
| 198° | (110%) | 80.0 | 80.0 | 80.1 | 80.1 | 80.2 |
| 225° | (125%) | 78.0 | 77.9 | 77.8 | 77.7 | 77.5 |

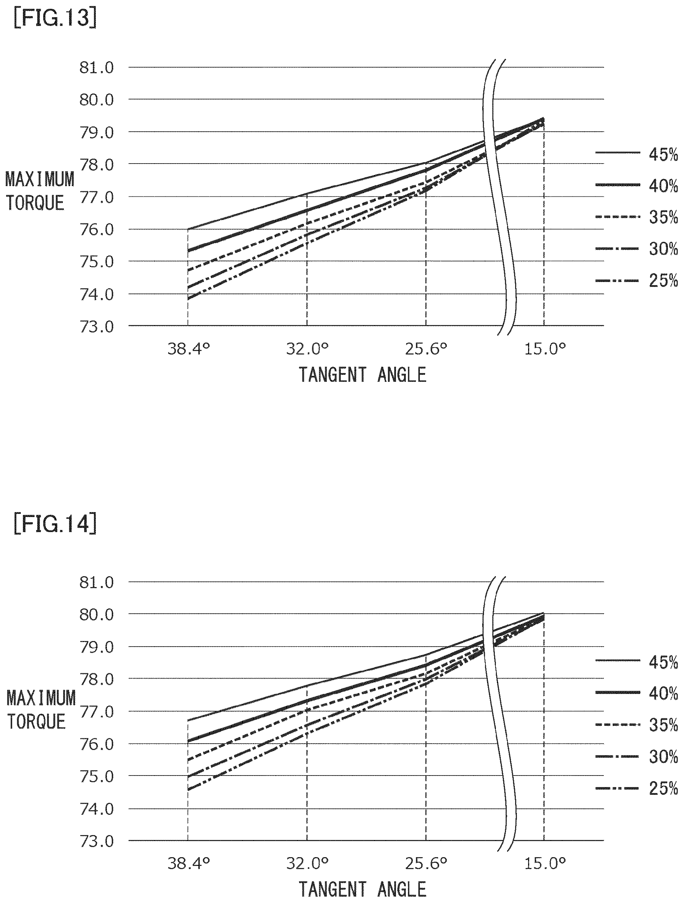

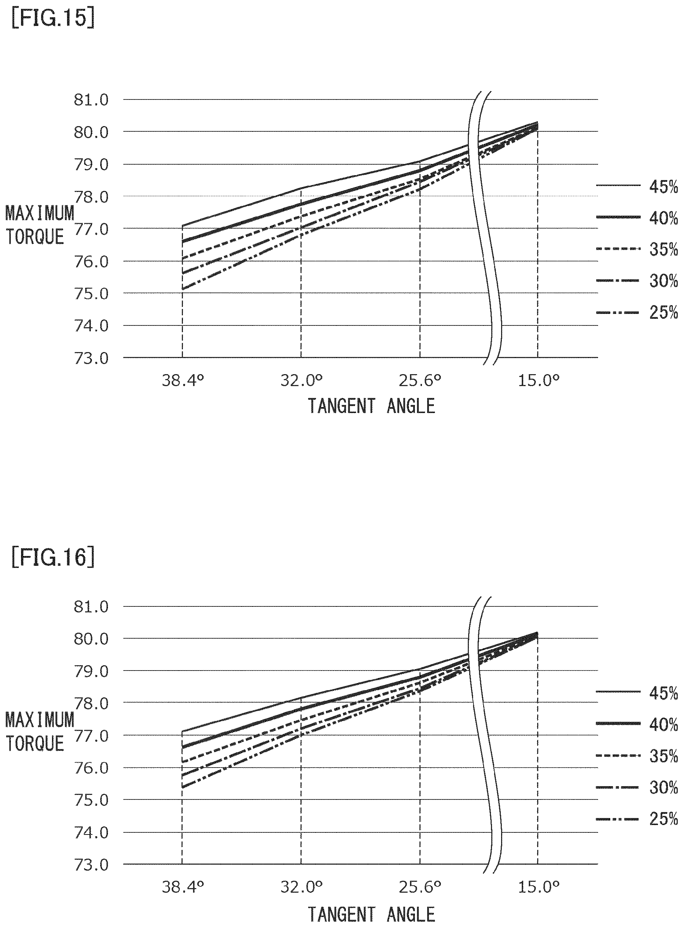

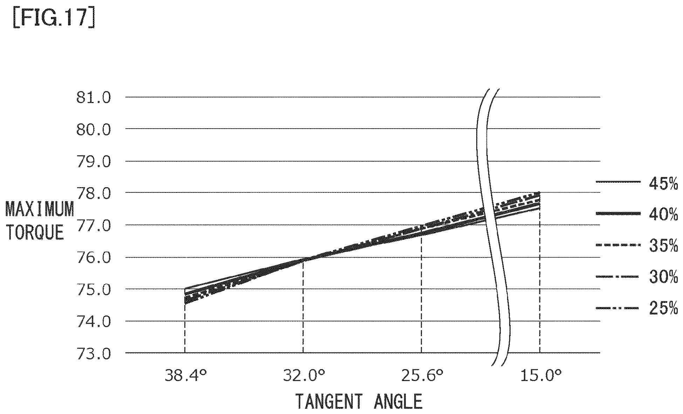

Tables 6 to 10 and FIGS 13 to 17 also show the maximum torque output by the single winding conductive wire 61 of the coil 60 of the coreless motor 100 when the tangent angle θ is varied from 38.4 degrees to 15.0 degrees and the ratio (length ratio) L1/L0 of the length L1 of the parallel portion 62 to the full length L0 of the coil 60 is varied from 0.25 (25%) to 0.45 (45%) in the coreless motor 100 of the present embodiment in which the ratio (ratio of angular pitch) β/α of the coil pitch β to the magnetic pole pitch α is set to 0.95 (95%), 1.00 (100%), 1.05 (105%), 1.10 (110%), and 1.20 (120%), respectively, to be set to each angular pitch β/α. FIGS. 13 to 17 are graphs of Tables 6 to 10, respectively.

[Table 6]

| PITCH : 171° (95%) | | | | | |
|---|---|---|---|---|---|
| RATIO OF LENGTH OF PARALLEL PORTION TANGENT ANGLE | 25% | 30% | 35% | 40% | 45% |
| 38.4° | 73.9 | 74.2 | 74.7 | 75.3 | 76.0 |
| 32.0° | 75.6 | 75.8 | 76.2 | 76.6 | 77.1 |
| 25.6° | 77.2 | 77.3 | 77.4 | 77.8 | 78.0 |
| 15.0° | 79.4 | 79.3 | 79.2 | 79.4 | 79.4 |

[Table 7]

| PITCH: 180° (100%) | | | | | |
|---|---|---|---|---|---|
| RATIO OF LENGTH OF PARALLEL PORTION TANGENT ANGLE | 25% | 30% | 35% | 40% | 45% |
| 38.4° | 74.6 | 75.0 | 75.5 | 76.1 | 76.7 |
| 32.0° | 76.3 | 76.6 | 77.0 | 77.3 | 77.8 |
| 25.6° | 77.8 | 78.0 | 78.1 | 78.4 | 78.7 |
| 15.0° | 79.9 | 79.8 | 79.9 | 79.9 | 80.0 |

[Table 8]

| PITCH : 189° (105%) | | | | | |
|---|---|---|---|---|---|
| RATIO OF LENGTH OF PARALLEL PORTION TANGENT ANGLE | 25% | 30% | 35% | 40% | 45% |
| 38.4° | 75.1 | 75.6 | 76.1 | 76.6 | 77.1 |
| 32.0° | 76.8 | 77.0 | 77.4 | 77.7 | 78.2 |
| 25.6° | 78.2 | 78.4 | 78.5 | 78.8 | 79.1 |
| 15.0° | 80.1 | 80.1 | 80.1 | 80.2 | 80.3 |

[Table 9]

| PITCH: 198° (110%) | | | | | |
|---|---|---|---|---|---|
| RATIO OF LENGTH OF PARALLEL PORTION TANGENT ANGLE | 25% | 30% | 35% | 40% | 45% |
| 38.4° | 75.4 | 75.7 | 76.2 | 76.6 | 77.1 |
| 32.0° | 77.0 | 77.2 | 77.5 | 77.8 | 78.2 |

(continued)

| PITCH: 198° (110%) | | | | | |
|---|---|---|---|---|---|
| RATIO OF LENGTH OF PARALLEL PORTION TANGENT ANGLE | 25% | 30% | 35% | 40% | 45% |
| 25.6° | 78.4 | 78.5 | 78.6 | 78.8 | 79.1 |
| 15.0° | 80.0 | 80.0 | 80.1 | 80.1 | 80.2 |

[Table 10]

| PITCH: 225° (125%) | | | | | |
|---|---|---|---|---|---|
| RATIO OF LENGTH OF PARALLEL PORTION TANGENT ANGLE | 25% | 30% | 35% | 40% | 45% |
| 38.4° | 74.6 | 74.6 | 74.7 | 74.8 | 75.0 |
| 32.0° | 75.9 | 75.9 | 75.9 | 75.9 | 75.9 |
| 25.6° | 77.0 | 76.9 | 76.9 | 76.7 | 76.7 |
| 15.0° | 78.0 | 77.9 | 77.8 | 77.7 | 77.5 |

According to the graphs shown in FIGS. 9 to 17, the coreless motor 100 of the present embodiment can increase the maximum torque T output by the coreless motor 100 as the tangent angle θ decreases. The coreless motor 100 of the present embodiment, within the range in which the ratio of the angular pitch β/α is 1.00 (100%) or more and 1.10 (110%) or less, can also increase the maximum torque T output by the coreless motor 100 compared to when the ratio of the angular pitch β/α is 1.00 (100%), and can increase the maximum torque T output by the coreless motor 100 as the ratio of length L1/L0 increases.

According to the above-described graphs shown in FIGS. 13 to 17, it is preferable for the coreless motor 100 of the present embodiment to have the range of the tangent angle θ of 15 degrees or more and 50 degrees or less, in order to increase the maximum torque T, and, in particular, in view of the above-described graph shown in FIG. 8, it is preferable for the coreless motor 100 of the present embodiment to have the range of the tangent angle θ of 20 degrees or more and 35 degrees or less, in order to suppress the increase in the cross-sectional area of the conductive wire 61 in the oblique portion 63, 64 as much as possible.

According to the above-described graphs shown in FIGS. 9 to 12, it is preferable for the coreless motor 100 of the present embodiment to have the range of the ratio of the angular pitch β/α from greater than 1.00 (100%) to 1.10 (110%) or less in addition to the range of the tangent angle θ described above, in order to increase the maximum torque T, and in particular, it is preferable for the coreless motor 100 of the present embodiment to have the range of the ratio of the angle pitch β/α of 1.05 (105%) or more and 1.10 (110%) or less in which the maximum torque T is maximized.

It is also preferable for the coreless motor 100 of the present embodiment to have the range of the ratio of the length L1/L0 of 0.25 (25%) or more and 0.75 (75%) or less, and in particular, it is preferable for the coreless motor 100 of the present embodiment to have the range of the ratio of the length L1/L0 of 0.25 (25%) or more and 0.45 (45%) or less, in addition to the above-described tangent angle θ and the range of the ratio of the angular pitch β/α.

It is preferable for the coreless motor 100 of the present embodiment to have the range of the ratio of the angular pitch β/α from greater than 1.00 (100%) and 1.10 (110%) or less when the tangent angle θ is the range of 15 degrees or more and 50 degrees or less, and the ratio of the length L1/L0 is the range of 0.25 (25%) or more and 0.75 (75%) or less, as described above.

However, for example, as shown in the above-described FIG. 9, when the tangent angle θ is 38.4 degrees and the ratio of the length L1/L0 is 0.25 (25%), even if the ratio the angular pitch β/α is set to the range from greater than 1.00 (100%) to 1.25 (125%), i.e., even if the upper limit of the ratio of the angular pitch β/α increases from 1.10 (110%) to 1.25 (125%), the coreless motor 100 can obtain the output that exceeds the maximum torque T when the ratio of the angular pitch β/α is 1.00 (100%).

For example, as shown in the above-described FIGS 9 to 11, when the tangent angle θ is 38.4 degrees, 32.0 degrees, or 25.6 degrees, even if the ratio of the angular pitch β/α is the range from greater than 1.00 (100%) to 1.15 (115%), i.e., even if the upper limit of the ratio of the angular pitch β/α increases from 1.10 (110%) to 1.15 (115%), the coreless motor 100 can obtain the output that exceeds the maximum torque T when the ratio of the angular pitch β/α is 1.00 (100%).

Therefore, when the tangent angle θ is 38.4 degrees and the ratio of the length L1/L0 is 0.25 (25%), it is possible for the coreless motor 100 to have the ratio of the angular pitch β/α of the range from greater than 1.00 (100%) to 1.25 (125%).

When the tangent angle θ is 38.4 degrees, 32.0 degrees, and 25.6 degrees, it is also possible for the coreless motor 100 to have the ratio of the angular pitch β/α of the range from greater than 1.00 (100%) to 1.15 (115%).

In the coreless motor 100 of this embodiment, the larger the length ratio L1/L0 is, the greater the maximum torque T that can be output. However, as the length ratio L1/L0 increases, the cross-sectional area of the conductive wire 61 in the oblique portion 63, 64 increases. As a result, the space factor of the conductive wire 61 in the parallel portion 62 decreases as described above.

If the space factor of the conductive wire 61 in the parallel portion 62 is smaller than a predetermined value or more, the strength of the parallel portion 62 decreases. As a result, the coil 60 may deform due to the centrifugal force acting when it rotates about the center C, and may contact the housing 10. Therefore, the coil 60 needs to have a strength sufficient to prevent the deformation during the rated rotation of the coreless motor 100.

As a result, the upper limit of the length ratio L1/L0 of the coreless motor 100 of the present embodiment is set to 0.75 (75%) in consideration of the strength that the coil 60 should have. In particular, to sufficiently increase the strength of the coil 60 by considering the safety factor at the rated rotation, the upper limit of the length ratio L1/L0 of the coreless motor 100 is preferably set to 0.45 (45%).

The coreless motor 100 of the embodiment has the lower limit of the length ratio L1/L0 of the coil 60 of 0.25 (25%). This is because it is easier for the coreless motor 100 to output the minimum maximum torque T that is normally required. If the length ratio L1/L0 of the coreless motor 100 is smaller than 0.25 (25%), it becomes difficult for the coreless motor 100 to sufficiently output the maximum torque T.

As described above, the coreless motor 100 of the present embodiment has the tangent angle θ set to the range of 15 degrees or more and 50 degrees or less, the ratio of the angle pitch ratio β/α set to the range of 1.00 or more and 1.25 or less, and the length ratio L1/L0 set to the range of 0.25 or more and 0.75 or less.

It is most preferable for the coreless motor 100 of the present embodiment to have the tangent angle θ set to the range of 20 degrees to 35 degrees, the ratio of the angular pitch β/α set to the range of 1.05 or more to 1.10 or less, and the length ratio L1/L0 set to the range of 0.25 to 0.45.

The coreless motor 100 of the present embodiment in which the tangent angle θ, the ratio of the angular pitch β/α, and the length ratio L1/L0 are set as described above is a practical coreless motor with a large maximum torque T to be output.

According to the results of verification by the applicant of the present application, the coreless motor 100 of the present embodiment was able to increase the maximum torque T to be output by, for example, up to about 10% compared to the conventional coreless motor with a hexagonal (tortoise-shell shape) coil in which the oblique portion 63, 64 is linearly formed.

The coreless motor 100 of the above-described embodiment is an outer rotor type coreless motor in which the coil 60 is arranged outside the magnet 30. However, the coreless motor according to the present invention is not limited to the outer rotor type coreless motor, and may be an inner rotor type coreless motor in which the coil 60 is arranged inside the magnet 30. The outer peripheral surface of the magnet in the inner rotor type coreless motor is fixed to the inner peripheral surface of the case 11, for example.

The magnet 30 of the coreless motor 100 of the above-described embodiment includes one N-pole 30N and one S-pole 30S. However, the magnet of the coreless motor according to the present invention may include two N-poles 30N and two S-poles 30S, or may include more than two magnetic poles.

**Claims**

1. A coreless motor, comprising:

   a rotating shaft;
   a coil that is formed by winding a conductive wire into a cylindrical shape, the coil being configured to rotate together with the rotating shaft; and
   a cylindrical magnet that is arranged inside or outside the cylindrical coil,
   wherein a single winding of the coil is formed into a hexagonal shape comprising a parallel portion extending parallel to an axial direction of the rotating shaft and two oblique portions that incline to a plane perpendicular to the axial direction and are connected to both ends of the parallel portion,
   the oblique portions are curved to have a convex from the inside to the outside of the single winding of the coil, and
   a tangent angle between a tangent line of the oblique portion that is drawn from a vertex connecting ends of the two adjacent oblique portions of the single winding of the coil and a plane perpendicular to the axial direction is set to a range of 15 degrees or more and 50 degrees or less.

2. The coreless motor according to claim 1, wherein the tangent angle is set to a range of 20 degrees or more and 35 degrees or less.

3. The coreless motor according to claim 1 or 2, wherein a ratio $\beta/\alpha$ of an angle interval $\beta$ between the two parallel portions of the single winding of the coil to an angle interval $\alpha$ between magnetic poles of the magnet is set to a range of greater than 1.00 and 1.25 or less.

4. The coreless motor according to claim 1 or 2, wherein a ratio $\beta/\alpha$ of an angle interval $\beta$ between the two parallel portions of the single winding of the coil to an angle interval $\alpha$ between magnetic poles of the magnet is set to a range of 1.05 or more and 1.10 or less.

5. The coreless motor according to claim 1 or 2, wherein a ratio $L1/L0$ of a length $L1$ of the parallel portion to a full length $L0$ along the axial direction of the single winding of the coil is set to a range of 0.25 or more and 0.75 or less.

6. The coreless motor according to claim 1 or 2, wherein a ratio $L1/L0$ of a length $L1$ of the parallel portion to a full length $L0$ along the axial direction of the single winding of the coil is set to a range of 0.25 or more and 0.45 or less.

7. A coreless motor, comprising:

> a rotating shaft;
> a coil that is formed by winding a conductive wire into a cylindrical shape, the coil being configured to rotate together with the rotating shaft; and
> a cylindrical magnet that is arranged inside or outside the cylindrical coil,
> wherein a single winding of the coil is formed into a hexagonal shape comprising a parallel portion extending parallel to an axial direction of the rotating shaft and two oblique portions that incline to a plane perpendicular to the axial direction and are connected to both ends of the parallel portion,
> the oblique portions are curved to have a convex from the inside to the outside of the single winding of the coil,
> a tangent angle between a tangent line of the oblique portion that is drawn from a vertex connecting ends of the two adjacent oblique portions of the single winding of the coil and a plane perpendicular to the axial direction is set to a range of 15 degrees or more and 50 degrees or less,
> a ratio $\beta/\alpha$ of an angle interval $\beta$ between the two parallel portions of the single winding of the coil to an angle interval $\alpha$ between magnetic poles of the magnet is set to a range of greater than 1.00 and 1.25 or less, and
> a ratio $L1/L0$ of a length $L1$ of the parallel portion to a full length $L0$ along the axial direction of the one winding of the coil is set to a range of 0.25 or more and 0.75 or less.

8. A coreless motor, comprising:

> a rotating shaft;
> a coil that is formed by winding a conductive wire into a cylindrical shape, the coil being configured to rotate together with the rotating shaft; and
> a cylindrical magnet that is arranged inside or outside the cylindrical coil,
> wherein a single winding of the coil is formed into a hexagonal shape comprising a parallel portion extending parallel to an axial direction of the rotating shaft and two oblique portions that incline to a plane perpendicular to the axial direction and are connected to both ends of the parallel portion,
> the oblique portions are curved to have a convex from the inside to the outside of the single winding of the coil,
> a tangent angle between a tangent line of the oblique portion that is drawn from a vertex connecting ends of the two adjacent oblique portions of the single winding of the coil and a plane perpendicular to the axial direction is set to a range of 20 degrees or more and 35 degrees or less,
> a ratio $\beta/\alpha$ of an angle interval $\beta$ between the two parallel portions of the single winding of the coil to an angle interval $\alpha$ between magnetic poles of the magnet is set to a range of 1.05 or more and 1.10 or less, and
> a ratio $L1/L0$ of a length $L1$ of the parallel portion to a full length $L0$ along the axial direction of the one winding of the coil is set to a range of 0.25 or more and 0.45 or less.

**Amended claims under Art. 19.1 PCT**

1. (Canceled)

2. A coreless motor, comprising:

> a rotating shaft;
> a coil that is formed by winding a conductive wire into a cylindrical shape, the coil being configured to rotate together with the rotating shaft; and

a cylindrical magnet that is arranged inside or outside the cylindrical coil,

wherein a single winding of the coil is formed into a hexagonal shape comprising a parallel portion extending parallel to an axial direction of the rotating shaft and two oblique portions that incline to a plane perpendicular to the axial direction and are connected to both ends of the parallel portion,

the oblique portions are curved to have a convex from the inside to the outside of the single winding of the coil, and

a tangent angle between a tangent line of the oblique portion that is drawn from a vertex connecting ends of the two adjacent oblique portions of the single winding of the coil and a plane perpendicular to the axial direction is set to a range of 20 degrees or more and 35 degrees or less.

3. A coreless motor, comprising:

a rotating shaft;

a coil that is formed by winding a conductive wire into a cylindrical shape, the coil being configured to rotate together with the rotating shaft; and

a cylindrical magnet that is arranged inside or outside the cylindrical coil,

wherein a single winding of the coil is formed into a hexagonal shape including a parallel portion extending parallel to an axial direction of the rotating shaft and two oblique portions that incline to a plane perpendicular to the axial direction and are connected to both ends of the parallel portion,

the oblique portions are curved to have a convex from the inside to the outside of the single winding of the coil,

a tangent angle between a tangent line of the oblique portion that is drawn from a vertex connecting ends of the two adjacent oblique portions of the single winding of the coil and a plane perpendicular to the axial direction is set to a range of 15 degrees or more and 50 degrees or less, and

a ratio $\beta/\alpha$ of an angle interval $\beta$ between the two parallel portions of the single winding of the coil to an angle interval $\alpha$ between magnetic poles of the magnet is set to a range of greater than 1.00 and 1.25 or less.

4. The coreless motor according to claim 3, wherein a ratio $\beta/\alpha$ of an angle interval $\beta$ between the two parallel portions of the single winding of the coil to an angle interval $\alpha$ between magnetic poles of the magnet is set to a range of 1.05 or more and 1.10 or less.

5. The coreless motor according to claim 2, wherein a ratio L1/L0 of a length L1 of the parallel portion to a full length L0 along the axial direction of the single winding of the coil is set to a range of 0.25 or more and 0.75 or less.

6. The coreless motor according to claim 2, wherein a ratio L1/L0 of a length L1 of the parallel portion to a full length L0 along the axial direction of the single winding of the coil is set to a range of 0.25 or more and 0.45 or less.

7. A coreless motor, comprising:

a rotating shaft;

a coil that is formed by winding a conductive wire into a cylindrical shape, the coil being configured to rotate together with the rotating shaft; and

a cylindrical magnet that is arranged inside or outside the cylindrical coil,

wherein a single winding of the coil is formed into a hexagonal shape including a parallel portion extending parallel to an axial direction of the rotating shaft and two oblique portions that incline to a plane perpendicular to the axial direction and are connected to both ends of the parallel portion,

the oblique portions are curved to have a convex from the inside to the outside of the single winding of the coil,

a tangent angle between a tangent line of the oblique portion that is drawn from a vertex connecting ends of the two adjacent oblique portions of the single winding of the coil and a plane perpendicular to the axial direction is set to a range of 15 degrees or more and 50 degrees or less,

a ratio $\beta/\alpha$ of an angle interval $\beta$ between the two parallel portions of the single winding of the coil to an angle interval $\alpha$ between magnetic poles of the magnet is set to a range of greater than 1.00 and 1.25 or less, and

a ratio L1/L0 of a length L1 of the parallel portion to a full length L0 along the axial direction of the one winding of the coil is set to a range of 0.25 or more and 0.75 or less.

8. A coreless motor, comprising:

a rotating shaft;

a coil that is formed by winding a conductive wire into a cylindrical shape, the coil being configured to rotate together with the rotating shaft; and

a cylindrical magnet that is arranged inside or outside the cylindrical coil,

wherein a single winding of the coil is formed into a hexagonal shape comprising a parallel portion extending parallel to an axial direction of the rotating shaft and two oblique portions that incline to a plane perpendicular to the axial direction and are connected to both ends of the parallel portion,

the oblique portions are curved to have a convex from the inside to the outside of the single winding of the coil,

a tangent angle between a tangent line of the oblique portion that is drawn from a vertex connecting ends of the two adjacent oblique portions of the single winding of the coil and a plane perpendicular to the axial direction is set to a range of 20 degrees or more and 35 degrees or less,

a ratio $\beta/\alpha$ of an angle interval $\beta$ between the two parallel portions of the single winding of the coil to an angle interval $\alpha$ between magnetic poles of the magnet is set to a range of 1.05 or more and 1.10 or less, and

a ratio L1/L0 of a length L1 of the parallel portion to a full length L0 along the axial direction of the one winding of the coil is set to a range of 0.25 or more and 0.45 or less.

[FIG.1]

[FIG.2]

[FIG.3A]

[FIG.3B]

[FIG.3C]

[FIG.4]

[FIG.5]

[FIG.6]

MAGNETIC FORCE
DISTRIBUTION
OF MAGNET

N-POLE
CENTER

MAGNETIC FIELD
INTENSITY          C

60

63a(63)

63b(63)

62b(62)

ANGLE PITCH AROUND CENTER C

62a(62)

$\alpha$

$\beta$

D

64b(64)

64a(64)

S-POLE CENTER

[FIG.7]

60

63a(63)

63b(63)

62a
(62)

62b(62)

L0   L1

64a(64)

64b(64)

[FIG.8]

[FIG.9]

[FIG.10]

[FIG.11]

[FIG.12]

[FIG.13]

[FIG.14]

[FIG.15]

[FIG.16]

[FIG.17]

## INTERNATIONAL SEARCH REPORT

| International application No. |
|---|
| **PCT/JP2023/012646** |

**A.    CLASSIFICATION OF SUBJECT MATTER**

*H02K 23/58*(2006.01)i; *H02K 3/04*(2006.01)i; *H02K 3/47*(2006.01)i
FI:    H02K23/58 Z; H02K3/04 E; H02K3/47

According to International Patent Classification (IPC) or to both national classification and IPC

**B.    FIELDS SEARCHED**

Minimum documentation searched (classification system followed by classification symbols)

H02K23/58; H02K3/04; H02K3/47

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-54026 A (CANON DENSHI KK) 20 March 2014 (2014-03-20) paragraphs [0009]-[0016], fig. 1-8 | 1 |
| Y | | 5-6 |
| Y | JP 52-56305 A (SONY CORPORATION) 09 May 1977 (1977-05-09) p. 2, fig. 4 | 5-6 |
| A | JP 55-23788 A (SONY CORPORATION) 20 February 1980 (1980-02-20) | 1-8 |

☐ Further documents are listed in the continuation of Box C.    ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **22 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012646**

| Patent document cited in search report | | | Publication date (day/month/year) | Patent family member(s) | Publication date (day/month/year) |
|---|---|---|---|---|---|
| JP | 2014-54026 | A | 20 March 2014 | (Family: none) | |
| JP | 52-56305 | A | 09 May 1977 | (Family: none) | |
| JP | 55-23788 | A | 20 February 1980 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014054026 A
- JP 55023788 A